Europäisches Patentamt

European Patent Office

Office européen des brevets

(11) Publication number: **0 275 241**
**A2**

(12) # EUROPEAN PATENT APPLICATION

(21) Application number: **88850002.2**

(22) Date of filing: **12.01.88**

(51) Int. Cl.4: **G 05 D 16/06**

(30) Priority: **13.01.87 SE 8700086**

(43) Date of publication of application:
**20.07.88 Bulletin 88/29**

(84) Designated Contracting States: **DE FR GB**

(71) Applicant: **AGA AKTIEBOLAG**
**S-18181 Lidingö (SE)**

(72) Inventor: **Winqvist, Bengt**
**Sjöstranden 3-5 F-67**
**SF-02320 Esbo (FI)**

(74) Representative: **Karlzén, Bengt Erik et al**
**AGA AB Patent Department**
**S-181 81 Lidingö (SE)**

(54) **Improvement to a gas regulator.**

(57) The disclosure relates to an apparatus in a gas regulator for reducing the variation of the secondary pressure ($p_2$) in relation to the primary pressure ($p_1$) on falling primary pressure. The regulator comprises a diaphragm (2) and first spring means (3) acting thereon, there being disposed, centrally in the diaphragm, a pressure member (4) intended to act on a spindle device (7) which cooperates with a movable valve insert (9) resting on a valve seat (8), and second spring means (10) acting on this insert. Between the pressure member (4) and the spindle device (7) there is inserted a fulcrum arrangement ($1_1$, $1_2$), the fulcrum ($1_2$) influenced by the pressure member being longer than the fulcrum ($1_1$) influenced by the spindle device, whereby the slope of the curve for the secondary pressure ($p_2$) as a function of the primary pressure ($p_1$) is reduced by a factor equal to $(1_2-1_1)/1_2$.

EP 0 275 241 A2

**Description**

IMPROVEMENT TO A GAS REGULATOR

## TECHNICAL FIELD

The present invention relates to an improvement to a gas regulator for reducing the variation of the secondary pressure in relation to the primary pressure on falling primary pressure, the regulator essentially comprising a diaphragm and first spring means acting thereon, there being disposed, centrally in the diaphragm, a pressure member intended to act on a spindle member which cooperates with a movable valve seat and second spring means acting thereon.

## BACKGROUND ART

In, for example, a counter-flow regulator, i.e. in which the valve device in the regulator opens in a direction opposite to the gas flow, the secondary pressure displays a rising characteristic with falling primary pressure. In many cases, it is desirable to obviate or at least reduce the effects of this inherent property. This is particularly so in laboratories and hospitals where, for instance, a flowmeter is connected to the regulator, the flowmeter being calibrated for a predetermined operating pressure. In such instance, the accuracy of the measured values will be dependent upon the stability of the pressure.

## OBJECT OF THE PRESENT INVENTION

Hence, the object of the present invention is to device an improved apparatus in a gas regulator such that substantially stable pressure (secondary pressure) will be obtained from the regulator, irrespective of variations in the primary pressure of the regulator. In this instance, the present invention is substantially characterized in that a fulcrum arrangement is disposed between the pressure member of the diaphragm in the regulator and the spindle device, the fulcrum $(l_2)$ influenced by the pressure member being longer than the fulcrum $(l_1)$ influenced by the spindle device, whereby the slope of the curve of the secondary pressure as a function of the spindle pressure is reduced by a factor equal to $(l_2-l_1)/l_2$.

The present invention is further characterized in that the fulcrum arrangement includes a linked arm pretensioned in the regulator housing, the pressure member of the diaphragm being disposed to abut against the central portion thereof, and a U-shaped device whose shanks abut against the linked arm, and the spindle device being disposed to abut against the web portion of the U-shaped device.

## BRIEF DESCRIPTION OF THE ACCOMPANYING DRAWINGS

The nature of the present invention and its aspects will be more readily understood from the following brief description of the accompanying drawings, and discussion relating thereto.

In the accompanying drawings:

Fig. 1 shows one embodiment of a regulator provided with a fulcrum arrangement according to the present invention;

Fig. 2 schematically illustrates the fulcrum arrangement, and

Fig. 3 shows the secondary pressure as a function of the primary pressure, both with and without the fulcrum arrangement.

## DESCRIPTION OF PREFERRED EMBODIMENT

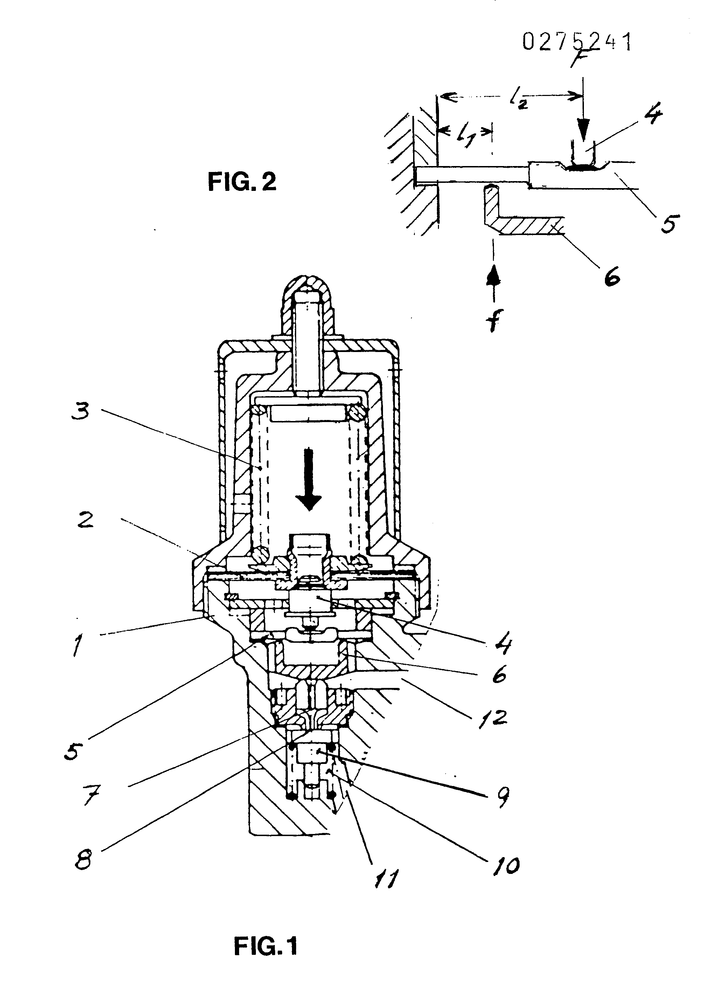

Referring to the drawings, Fig. 1 is a cross-section through a gas regulator in which one embodiment of a fulcrum arrangement has been inserted. The regulator comprises a regulator housing 1 with a diaphragm 2 pretensioned therein. Between the regulator housing and the diaphragm, there is disposed a spring 3 which acts upon the diaphragm with a force F. The surface area of the membrane is equal to A. In the central region of the diaphragm, there is disposed a pressure member 4 which is operative to act on the central portion of a linked arm 5 whose ends are tensioned in the regulator housing 1. The shanks of a U-shaped device 6 act on the arm 5. The web portion of the U-shaped device 6 abuts against the spindle device 7 in the valve arrangement of the regulator. The spindle 7 cooperates with a movable valve insert 9 which rests against a fixed valve seat 8 of a surface area a. The valve insert 9 is disposed to be influenced by a spring 10, the spring urging the valve insert towards the spindle and valve seat by a force f. An inlet channel 11 is provided in the regulator housing, in which channel the primary pressure $p_1$ prevails, and an outlet channel 12, in which the secondary pressure $p_2$ prevails.

In order to explain the function of the fulcrum arrangement in the regulator, the regulator may first be viewed as if the fulcrum arrangement had not been provided.

The following factors will then act in a downward direction:

- The spring force F from the spring 3.
- The atmospheric pressure multiplied by the diaphragm surface area A, the atmospheric pressure being set at equal to 1.
- The secondary pressure $p_2$ (in the outlet 12) multiplied by the surface area a of the valve seat (designated by reference numeral 8 in the valve arrangement).

The following factors will act in an upward direction:

- The spring force f from the spring 10.
- The primary pressure $p_1$ (in the inlet 11) multiplied by the surface area a of the valve seat (in the valve arrangement).
- The secondary pressure $p_2$ multiplied by the surface area A of the diaphragm.

At equilibrium, these forces should be equal, wherein

$$F + A \cdot 1 + p_2 \cdot a = f + p_2 \cdot A + p_1 \cdot a$$
$$p_2(a-A) = f-F-A + p_1 \cdot a \qquad (X)$$

$$\frac{dp_2}{dp_1} = \frac{a}{a-A} = -\frac{a}{A-a}$$

which, thus is the slope of the curve p2 as a function of $P_1$.

Now considering the regulator employing the fulcrum arrangement, there will be obtained at equilibrium according to Fig. 2 and Fig. 1

$F \bullet l_2 + l \bullet A \bullet l_2 = f \bullet l_1 + p_1 \bullet a \bullet l_1$

$F = f \bullet l_1 \bullet / l_2 + p_1 \bullet a \bullet l_1 / l_2 - A$

This expression of F is entered in the equation (X) above, giving:

$$\frac{dp_2}{dp_1} = \frac{a}{a-A} \, (1-l_1/l_2)$$
$$= -\frac{a}{A-a} \, (l_2-l_1)/l_2$$

which is a slope of the curve p2 as a function of p1 with the fulcrum arrangement in the regulator. Hence, the slope of the curve will be reduced by the factor $(l_2-l_1)l_2$.

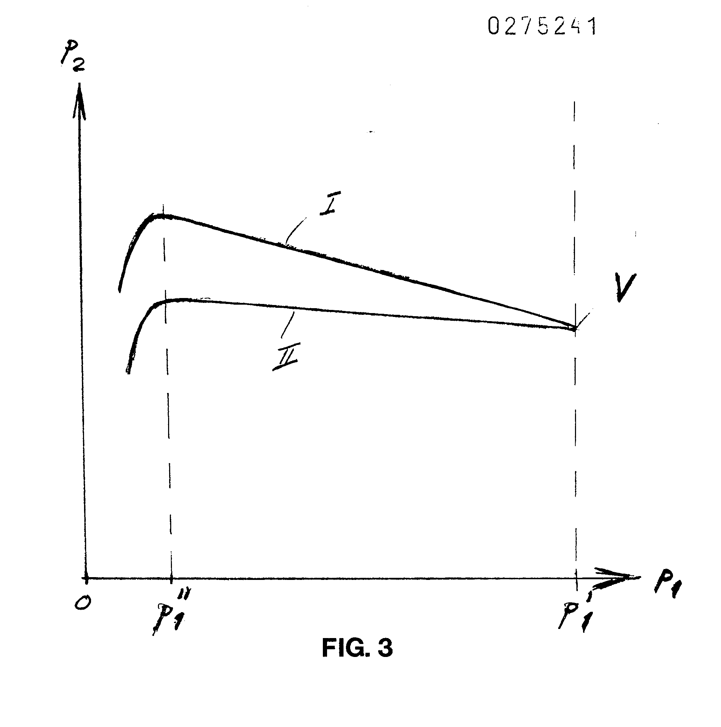

Fig. 3 shows the variation of the secondary pressure p2 in relation to the primary pressure $P_1$. In the illustrated example, a constant volume V has been taken from the regulator, in, for example, $m^3/h$ from a reservoir at an initial pressure of $p_1'$. Measurement of the secondary pressure and primary pressure was carried out with regulators both with and without the fulcrum arrangement. According as the gas is released, the primary pressure falls to $p_1'$ '. During this reduction of the primary pressure, the secondary pressure p2 will increase according to the curve I if no fulcrum arrangement is provided in the regulator. On the other hand, with the fulcrum arrangement disposed in the regulator, a curve II will be obtained which displays a considerably less manifest slope. By inserting a fulcrum arrangement and dimensioning the fulcrum in a suitable manner, it is, thus, possible greatly to reduce the secondary pressure modification in response to reduction in primary pressure and thereby obtain a substantially stable pressure from the regulator.

## Claims

1. In a gas regulator, an improved apparatus for reducing the variation of the secondary pressure (p2) in relation to the primary pressure (p1) on falling primary pressure, the regulator comprising a diaphragm (2) and first spring means (3) acting thereon, there being disposed, centrally in the diaphragm, a pressure member (4) intended to act on a spindle device (7) which cooperates with a movable valve insert (9) which rests against a valve seat (8), and second spring means (10) acting thereon, characterized in that there is disposed, between said pressure member (4) and said spindle device (7), a fulcrum arrangement ($l_1$, $l_2$), the fulcrum ($l_2$) influenced by said pressure member being longer than the fulcrum ($l_1$) influenced by said spindle device, whereby the slope of the curve for the secondary pressure (p2) as a function of the primary pressure (p1) is reduced by a factor equal to $(l_2-l_1)/l_2$.

2. The apparatus as claimed in Claim 1, characterized in that said fulcrum arrangement includes a linked arm (5) tensioned in the regulator housing, said pressure member (4) being disposed to abut against the central portion thereof, and a U-shaped device (6) whose shanks abut against said linked arm (5) and said spindle device (7) being disposed to abut against the web portion of said U-shaped device.

0275241

FIG. 2

FIG.1

FIG. 3